Europäisches Patentamt

European Patent Office

Office européen des brevets

(19)

(11) Numéro de publication: **0 099 811**
**B1**

(12) **FASCICULE DE BREVET EUROPEEN**

(45) Date de publication du fascicule du brevet:
**11.03.87**

(51) Int. Cl.⁴: **C 08 J 3/12, C 08 L 33/00**

(21) Numéro de dépôt: **83401415.1**

(22) Date de dépôt: **08.07.83**

(54) **Procédé de préparation de flocons de polymères acryliques.**

(30) Priorité: **20.07.82 FR 8212611**

(43) Date de publication de la demande:
**01.02.84 Bulletin 84/5**

(45) Mention de la délivrance du brevet:
**11.03.87 Bulletin 87/11**

(84) Etats contractants désignés:
**AT DE FR GB IT NL SE**

(56) Documents cités:
**CH - A - 407 545**
**FR - A - 2 109 642**
**FR - A - 2 150 973**
**FR - A - 2 242 409**
**FR - A - 2 368 503**

**Le dossier contient des informations techniques
présentées postérieurement au dépôt de la demande et
ne figurant pas dans le présent fascicule.**

(73) Titulaire: **RHONE-POULENC SPECIALITES CHIMIQUES,
"Les Miroirs" 18, Avenue d'Alsace, F-92400 Courbevoie
(FR)**

(72) Inventeur: **Boutin, Jean, 7 rue Buzy, F-69780 Mions (FR)**

(74) Mandataire: **Tavernier, Colette et al, RHONE-POULENC
INTERSERVICES Service Brevets Chimie 25, Quai Paul
Doumer, F-92408 Courbevoie Cédex (FR)**

ACTORUM AG

## Description

La présente invention a pour objet un procédé pour la préparation de flocons de polymères acryliques hydrosolubles ou hydrophiles, du type polyacrylamide. L'invention concerne aussi les flocons obtenus par ce procédé.

Les homopolymères et copolymères acryliques hydrosolubles à poids moléculaire élevé ont trouvé des applications intéressantes sous forme de leurs solutions aqueuses diluées notamment comme agents floculants pour le traitement des eaux résiduaires ou comme épaississants dans les industries du papier et l'industrie pétrolière. Par copolymères acryliques hydrophiles, on entend des substances insolubles dans l'eau mais aptes à absorber des fluides aqueux; ces copolymères sont utilisables en particulier comme réten-teurs d'eau en agriculture, horticulture, floriculture.

Ces polymères peuvent être obtenus par polymérisation en solution aqueuse de monomères acryliques. Par ce type de procédé, le polymère se présente sous la forme de feuilles, de plaques ou de blocs d'un gel solide de consistance plastique et caoutchouteuse qui doivent être subséquemment coupés ou hachés à l'aide d'un dispositif spécial du type extrudeuse ou «hachoir à viande».

Il n'est pas possible d'ensacher directement le polymère sous forme de gel coupé ou haché car les morceaux caoutchouteux et collants s'agglomèrent et se soudent au cours du stockage. Les gels sont donc généralement déshydratés, séchés et broyés en poudre fine. Mais le séchage et le broyage sont des opérations coûteuses en investissement et frais d'exploitation et qui peuvent conduire à une dégradation du polymère. Dans le cas des polymères hydro-solubles, la dégradation se traduit par une diminution de la viscosité en solution et/ou la formation de microgels insolubles si des précautions suffisantes ne sont pas prises. En outre, la poudre séchée et broyée con-tient de fines particules génératrices de poussière qui ont tendance à former des grumeaux difficiles à dissoudre lors de la préparation des solutions aqueuses.

On a déjà proposé divers traitements des gels ou des poudres de polyacrylamides, dans le but d'éviter l'agglomération, de réduire la formation de poussières ou d'améliorer la fluidité et/ou la vitesse de dissolution dans l'eau.

Ainsi selon US-A-4 080 358 les polyacrylamides à l'état finement divisé sont mélangés avec un poly(alkylène)glycol et un agent anti-mottant tel qu'une silice ou un silicate. L'agent anti-mottant est ajouté après séchage du gel et tamisage à la taille appropriée. D'après FR-A-2 368 503 on re-médie aux propriétés collantes de la surface d'un hydrogel du type polyacrylamide par enduction avec un acide gras ou son sel alcalin. L'acide gras est utilisé en proportion d'environ 0,01% et il peut être ajouté au stade de la polymérisation ou par saupoudrage ou pulvérisation sur le gel soit avant broyage soit après broyage. Il est précisé que l'effet obtenu est sensiblement le même quel que soit la méthode utilisée. Après le broyage, les particules de gel sont séchées.

Selon un autre procédé connu (FR-A-2 150 973), on broie des gels de polyacrylamide à forme stable, qui ne sont pas collants et qui contiennent 40 à 90% d'eau puis on les poudre avec une substance minérale ou organique telle que des amidons, de la dextrine, des silicates, des argiles, de la silice activée.

Ces procédés ne permettent pas d'obtenir directement à la sortie de l'appareillage de broyage du gel des granulés non collants de faible dimension.

La présente invention a donc pour objet un procédé pour l'obtention de gels de polymères hydro-solubles ou hydrophiles sous forme de flocons de faibles dimensions, pouvant être facilement ensachés et qui ne forment pas d'agglomérats au cours du stockage.

Un autre objet de l'invention est de fournir un polymère hydrosoluble qui ne forme pas de poussières, qui soit facilement dispersible dans l'eau et qui se dissolve rapidement sans formation de grumeaux ou de microgels insolubles.

On a maintenant trouvé un procédé permettant d'obtenir un polymère hydrosoluble ou hydrophile sous forme de flocons à partir de feuilles, de plaques ou de blocs de gels caoutchouteux sans qu'il soit nécessaire de procéder à un séchage et à un broyage subséquent.

Selon l'invention, le procédé est caractérisé en ce que l'on hache le gel caoutchouteux dans un appareil à déchiqueter en présence d'un agent de conditionnement minéral ou organique solide, particulaire, en quantité comprise entre 5 et 40% en poids par rapport au poids du gel, de manière à obtenir à la sortie de l'appareil un mélange constitué des flocons du gel de polymère enrobés de l'agent de conditionnement et de poudre d'agent de conditionnement en excès.

De manière inattendue, on a trouvé que les gels de polymères ne pouvaient être obtenus sous forme granulaire fluide et non agglomérante que si le gel était haché avec l'agent de conditionnement en excès de la quantité nécessaire à l'enrobage des particules. Si l'agent de conditionnement est incorporé à la polymérisation ou après le hachage ou en quantité insuffisante, on ne parvient pas à obtenir le gel sous forme de granulés séparés, non agglomérants.

De manière avantageuse la poudre en excès est séparée des flocons de polymère par tamisage.

Le procédé faisant l'objet de l'invention est applicable aux gels de polymères acryliques obtenus par polymérisation ou copolymérisation en solution aqueuse de monomères acryliques selon toute méthode connue. On préfère les procédés de polymérisation sous irradiation qui permettent d'obtenir des poids moléculaires élevés. Il est particulièrement bien adapté aux gels obtenus par photopolymérisation en couche mince sur un support hydrophobe en présence d'un photoinitiateur. Pour leur préparation on peut se référer à FR-A-2 348 227, 2 428 054 et 2 453 185.

Comme monomères acryliques, on cite notamment l'acrylamide, le méthacrylamide, le 2-acrylamido-2-méthylpropane-sulfonate de sodium, l'acrylonitrile, le méthacrylonitrile, l'acide acrylique, l'acide méthacrylique ainsi que leurs sels ou esters, les acrylates et méthacrylates d'aminoalkyle éventuellement quaternisés et leurs mélanges. La nature et la proportion des monomères, le type de catalyseur, d'initiateur et/ou la durée d'irradiation sont évidemment choisies de manière à obtenir un polymère hydrosoluble ou hydrophile selon l'application envisagée. Le poids moléculaire du polymère hydrosoluble est généralement supérieur à 1 million, de préférence supérieur à 3 millions.

Les copolymères hydrophiles sont dérivés des mêmes monomères mais sont faiblement réticulés d'une façon connue dans la technique de ces polymères par irradiation ou par incorporation dans le mélange de monomères à polymériser d'un monomère réticulant polyfonctionnel tel que par exemple l'éther divinylique du diéthylène glycol, le divinylbenzène, le N,N'-méthylène bisacrylamide ou le méthylolacrylamide. La quantité d'agent de réticulation est habituellement comprise entre 0,025 et 2% par rapport au poids total des monomères. Le degré de réticulation doit être suffisant pour que les copolymères résultants soient insolubles dans l'eau et fortement gonflables par l'eau.

Selon la nature des monomères, la concentration du polymère dans le gel caoutchouteux peut varier entre 20 et 85% en poids. Plus spécialement, la concentration est généralement comprise entre 20 et 60%, de préférence entre 40 et 50% pour les polymères anioniques et non ioniques et entre 40 et 85% de préférence entre 40 et 75% pour les polymères cationiques.

L'agent de conditionnement utilisable dans le procédé faisant l'objet de l'invention est une substance en poudre, minérale ou organique, inerte vis à vis du polymère, susceptible d'absorber l'eau ou de prévenir la reprise d'humidité et ayant un bon pouvoir d'enrobage. On peut utiliser par exemple des silices, des silicates, des alumines, des amidons, des acides gras.

On peut ainsi faire appel à des silices précipitées se présentant sous forme de particules fines à grande surface. Préférentiellement on utilise des silices qui présentent une surface spécifique BET comprise entre 200 et 400 m²/g, un diamètre des particules ultimes variant entre $2.10^{-2}$ et $8.10^{-2}$ µm, un diamètre moyen des agglomérats inférieur à 100 µm et une densité apparente pour le produit tassé inférieure à 0,25 et de préférence inférieure à 0,20.

On peut également utiliser des hydrates d'alumine naturels ou synthétiques, ou des gels d'alumine séchés du type boehmite qui présentent une surface de 200 à 400 m²/g et des pores de $0,50.10^{-2}$ à $10^{-2}$ µm

On peut encore faire appel à des silicates comme les silicates d'aluminium hydraté sous la forme des argiles, des zéolithes naturelles ou synthétiques. Comme exemples d'argiles susceptibles d'être utilisées, on peut citer en particulier l'attapulgite, la sepiolite, la bentonite, la vermiculite.

L'agent de conditionnement peut encore être une substance organique comme par exemple les amidons et les dérivés d'amidons, les acides gras et leurs sels de métaux alcalins.

Parmi tous ces produits, on donne la préférence aux silices et aux argiles qui ont un pouvoir d'absorption d'eau élevé.

La proportion d'agent de conditionnement par rapport au gel de polymère variera selon la nature et la quantité de matière sèche du gel, selon la nature et la granulométrie de l'agent de conditionnement et selon les dimensions des flocons que l'on désire obtenir. Comme il a été indiqué précédemment, il est essentiel d'avoir un excès d'agent de conditionnement par rapport à la quantité qui adhérera sur les flocons du gel. On déterminera aisément la quantité nécessaire dans chaque cas particulier à l'aide de quelques essais préliminaires. De manière générale, cette quantité peut être comprise entre 5 et 40% en poids par rapport au poids du gel; de préférence on utilise 15 à 35 g d'agent de conditionnement pour 100 g de gel.

Pour la mise en œuvre du procédé selon l'invention, on opère de la manière suivante: le gel de polymère, sous la forme d'une bande ou de morceaux de grandes dimensions est introduit dans un appareil à déchiqueter en même temps que la poudre d'agent de conditionnement. Alternativement on peut mélanger préalablement le gel et la poudre ou saupoudrer l'agent de conditionnement sur au moins une des deux faces de la bande caoutchouteuse puis introduire le mélange dans l'appareil à déchiqueter. On peut opérer dans un hachoir type hachoir à viande composé d'une vis d'archimède métallique tournant dans un cylindre, de sorte que les parties externes du pas de vis soient très proches des surfaces internes du cylindre qui les contient sans les toucher. La vis force le gel caoutchouteux contre une plaque perforée d'un grand nombre de trous qui fait office de filière pour le produit malaxé. L'extrusion est facilitée par des couteaux solidaires de la vis qui tournent contre la plaque perforée. La tête du hachoir peut être refoidie pour diminuer l'échauffement créé par la friction des couteaux sur la filière et par la pression du gel sur les différentes parties du hachoir. Le diamètre des trous de la filière est compris entre 1 et 10 mm, plus généralement entre 2 et 8 mm et de préférence entre 4 et 6 mm.

Le mélange obtenu à la sortie de l'appareil se compose d'une part de flocons parfaitement séparés de gel enrobé de la poudre d'agent de conditionnement et d'autre part de l'excès de poudre. Ce mélange peut être directement ensaché.

Selon une forme de réalisation préférée, le mélange récupéré à la sortie du hachoir est tamisé sur une grille dont l'ouverture des mailles est égale ou inférieure à 0,5 mm. L'agent de conditionnement en excès, contenant éventuellement une petite proportion de polymère, peut être recyclée dans le hachoir.

Le procédé peut être en œuvre en continu avec le procédé de polymérisation ou en discontinu.

Le produit obtenu se présente sous forme de grains éclatés de polymère ou flocons recouverts d'une fine pellicule adhérente de l'agent de conditionnement. La quantité d'agent de revêtement est généralement comprise entre 1 et 20% en poids. Leur dimension moyenne particulaire est comprise entre environ 0,3 et 8 mm, avantageusement entre 0,5 et 5 mm et préférentiellement entre 1 et 4 mm. Du fait de leur dimension les flocons de gel hydrosoluble se dispersent facilement dans l'eau et ils se dissolvent sans formation de grumeaux.

Les avantages du procédé suivant l'invention sont en particulier la possibilité de préparer aisément des flocons de gel de faible dimension, non collante, sans nécessiter un séchage et un broyage pouvant avoir pour conséquence une dégradation partielle du polymère.

Les exemples suivants illustrent l'invention:

EXEMPLE 1
Préparation du gel hydrosoluble
On prépare la solution suivante:
- eau     130,1 g
- acide acrylique     35,2 g
- NaOH à 50%     39 g
- Acrylamide     95,3 g
- Gluconate de sodium     1,6 g

On ajoute à l'abri de la lumière 0,4 ml d'une solution de benzildiméthylacétal à 34 g/litre d'acide acrylique.

On ajuste le pH à 12,5 avec de la soude. La solution est désoxygénée par un courant d'azote. On coule la solution sur une plaque plane d'acier inoxydable de 36 cm de longueur, 15 cm de largeur, bordée de ridelles de 1 cm, de façon à former une couche de 5,2 mm. L'atmosphère gazeuse au-dessus de la couche liquide, délimitée par une plaque de verre, a été préalablement à l'introduction du mélange liquide, débarrassée de l'oxygène par un courant d'azote humide. La couche liquide est soumise pendant 15 minutes au rayonnement de 3 lampes ultraviolettes de type actinique (Philipps TLDAK 30W05); la puissance des lampes passant progressivement de 400 watts/m$^2$ à 1200 watts/m$^2$. La plaque est refroidie en-dessous par des jets d'eau, pendant l'irradiation. Après 15 min d'irradiation, on obtient une couche de gel caoutchouteux de 5,2 mm d'épaisseur titrant 47,5% en poids de matière sèche.

On répète l'opération plusieurs fois.

La couche caoutchouteuse obtenue est découpée en lanières d'environ 4 × 5 × 0,52 cm. Dans un récipient en acier inoxydable on mélange 600 g de lanières et 180 g de silice précipitée ayant une surface spécifique BET de 250 m$^2$/g, un diamètre des particules ultimes de $2,25.10^{-2}$ µm, un diamètre des agglomérats tertiaires de 70 µm et une densité apparente pour le produit tassé de 0,19. (TIXOSIL 38A de la Société RHONE-POULENC).

Le mélange est introduit lentement dans un hachoir à viande équipé d'une vis d'archimède ayant une longueur de 12 cm et un diamètre de 4,9 à 4,2 cm, et d'une grille de 7 cm de diamètre avec des trous de 4 mm. La température du hachoir est maintenue à 23–25°C par de l'air comprimé.

On récupère des flocons blancs, éclatés, de gel de polymère détachés les uns des autres, non collants.

Sur le mélange obtenu on effectue une granulométrie à l'aide de tamis AFNOR dont l'ouverture de mailles varie entre 40 et 4000 µm. Sur chaque fraction obtenue on détermine le % de silice par dosage du silicium (fluorescence X) le % de polymère par dosage du carbone (microanalyse élémentaire) et le % d'eau par perte à 105°C.

Les résultats sont exprimés dans le tableau I.

Tabelle I

| Dimension de la fraction en micromètres | % poids | % SiO₂ | % Eau | % Polymère |
|---|---|---|---|---|
| Supérieur à 4000 | 0 | – | – | – |
| compris entre 3150 et 4000 | 0,94 | – | 42,6 | – |
| compris entre 2500 et 3150 | 10,73 | 4,1 | 44,1 | 51,3 |
| compris entre 2000 et 2500 | 17,97 | 9 | 44,5 | 46,5 |
| compris entre 1600 et 2000 | 13,95 | 5,7 | 43,5 | 48,2 |
| compris entre 1000 et 1600 | 24,52 | 10,5 | 43 | 46 |
| compris entre 500 et 1000 | 11,45 | 13,67 | 42,9 | 43,4 |
| compris entre 100 et 500 | 12,02 | 56,6 | 27,9 | 13,2 |
| compris entre 40 et 100 | 7,61 | 77,0 | 18,3 | 3 |
| inférieure à 40 | 0,81 | – | – | – |

La partie inférieure à 500 μm (20,44%) est constituée principalement de silice. La partie supérieure à 500 μm (79,56%) est constituée de gel contenant en moyenne 47% de polymère, 44% d'eau et 9% de silice.

Pour évaluer la vitesse de dissolution on introduit 5,75 g de chaque fraction dans un bécher contenant 500 ml d'eau déminéralisée agitée au barreau magnétique. On mesure le temps nécessaire pour développer la viscosité maximale, qui correspond au temps nécessaire à la dissolution. Les mesures sont faites à 20 °C à l'aide d'un viscosimètre BROOKFIELD modèle RVT à la vitesse de 10 tours/minute avec le mandrin n° 1, 2, 3 ou 4 selon la viscosité. Les résultats figurent au tableau II.

Tabelle II
Viscosité en mPa.s

| Temps en min | Fraction 200–2500 μm | Fraction 1600–2000 μm | Fraction 1000–1600 μm | Fraction 500–1000 μm |
|---|---|---|---|---|
| 10 | 140 | 300 | 1800 | 2000 |
| 25 | 700 | 3600 | 3500 | 3500 |
| 50 | 3700 | 7000 | 4400 | 3500 |
| 75 | 5500 | 7300 | 4300 | 3300 |
| 100 | 5300 | 7100 | 4100 | 3100 |

EXEMPLE 2

On prépare deux plaques de gel caoutchouteux comme dans l'exemple 1. On divise les plaques en trois parties de 200 g chacune.

200 g sont hachés de la même manière que dans l'exemple 1 mais sans silice. Le «produit haché témoin» se présente en cordons qui s'agglomèrent.

200 g sont également hachés sans silice puis séchés 1 heure à 70 °C dans une étuve ventilée et broyés. On obtient une «poudre témoin».

200 g sont enduits sur les deux faces avec 2 g de sulfite neutre de sodium puis sont hachés en présence de 60 g de silice TIXOSIL 38 A. Le produit est tamisé à 500 μm.

On prépare de manière identique à l'exemple précédent les solutions à une teneur, exprimée en poids, de 0,5% en polymère et on mesure la viscosité BROOKFIELD des solutions auxquelles on ajoute 5% de chlorure de sodium. Le temps de dissolution du produit haché témoin est de 24 heures; la viscosité de la solution est de 290 mPa.s. Pour la poudre témoin et le produit selon l'invention, on obtient une dissolution complète en, respectivement 1 heure et 4 heures; cependant, la viscosité est de 240 mPa.s pour la poudre témoin et de 310 mPa.s pour le produit selon l'invention.

Les trois produits sont séparément ensachés et sur chaque échantillon on applique une pression de 2.10⁴ Pa. Après 5 jours de pressage, le produit témoin haché forme un bloc caoutchouteux, la poudre témoin et les flocons selon l'invention sont fluides.

EXEMPLE 3 (Comparatif)

200 g de plaque caoutchouteuse préparées selon l'exemple 1 sont hachées dans un hachoir équipé d'une grille de 4 mm. On mélange à la main le gel haché avec 60 g de silice TIXOSIL 38 A. On obtient un mélange de cordons caoutchouteux et de silice. On repasse ce mélange dans le hachoir à viande. On récupère de nouveau des cordons collants.

EXEMPLE 4

On prépare des plaques de gel et on les découpe en lanières comme décrit dans l'exemple 1. On mélange 600 g de lanières et 180 g de silice TIXOSIL 38 A. On introduit le mélange en 24 minutes dans le hachoir équipé d'une grille de 6 mm. La tête du hachoir est refroidie en continu par un courant d'eau froide qui circule à l'intérieur. On tamise à 500 μm (Essai A).

On répète l'opération de manière à avoir au total au moins 180 g de poudre de granulométrie inférieure à 500 μm. Dans les essais suivants on recycle 180 g de fraction inférieure à 500 μm de l'essai précédent avec 600 g de lanières de gel et on tamise (Essais B à E).

L'analyse de chaque fraction est rassemblée dans les tableaux III et IV, les pourcentages étant exprimés en poids.

Tabelle III
Fractions supérieures à 500 μm

| | Essai A | Essai B | Essai C | Essai D | Essai E |
|---|---|---|---|---|---|
| Quantité en % | 76 | 79 | 80 | 80 | 80 |
| Polymère % | 50,5 | 48,4 | 47,9 | 50,0 | 50,2 |
| SiO₂ % | 2,96 | 3,92 | 3,66 | 1,5 | 1,4 |
| Eau % | 46,3 | 46,9 | 47,8 | 47,9 | 46,7 |
| Viscosité Brookfield Solution à 9,3 g/l | 4250 | 4150 | 4050 | 4100 | 4000 |

Tableau IV
Fractions inférieures à 500 µm

|  | Essai A | Essai B | Essai C | Essai D | Essai E |
|---|---|---|---|---|---|
| Quantité en % | 24 | 21 | 20 | 20 | 20 |
| Polymère % | 3,3 | 5,7 | 9,4 | 13,2 | 16,2 |
| $SiO_2$% | 74,8 | 65,15 | 59,8 | 57,0 | 50,35 |
| Eau % | 19,1 | 23,0 | 25,8 | 26,5 | 27,4 |

La répartition granulométrique des 5 fractions supérieures à 500 µm est la suivante:

Tableau V

| Dimensions en microns | Essai A | Essai B | Essai C | Essai D | Essai E |
|---|---|---|---|---|---|
| > 4000 | 15,28 | 17,0 | 16,12 | 17,3 | 18,2 |
| Compris entre 3150 et 4000 | 29,33 | 30,2 | 28,23 | 29,9 | 30,4 |
| Compris entre 1000 et 3150 | 51,42 | 49,1 | 50,89 | 48,6 | 47,2 |
| Compris entre 500 et 1000 | 3,97 | 3,7 | 4,76 | 4,2 | 4,2 |

Les 5 produits ont sensiblement la même granulométrie, avec 77–81% des particules comprises entre 1 et 4 mm.

Les 5 fractions supérieures à 500 µm sont séparément mises dans 5 sacs sur lesquels on applique une pression de $2.10^4$ Pa. Après 5 jours de pressage, les flocons restent fluides.

EXEMPLE 5

On mélange 600 g de lanières obtenues comme dans l'exemple 1 avec 180 g de différents agents de conditionnement. Le mélange est introduit dans le hachoir équipé d'une grille de 6 mm refroidie à l'eau froide. Le produit haché est tamisé à 500 µm. Les pourcentages obtenus sont exprimés dans le tableau VI.

On utilise les agents de conditionnement suivants:
– Silicoaluminates
– bentonite type A (société GADOR) – Argile gonflante sodique artificielle activée 95% des particules inférieures à 74 µm; densité apparente 0,7
– bentonite F 50 (société GADOR)
– attapulgite – Argile fibreuse broyée 95% des particules inférieures à 40 µm densité apparente 0,2 (produit tassé)
– Amidon de pomme de terre (CELLOCOL LZ des Ets DOITTAU)
– Acide stéarique

Dans tous les cas le produit sortant du hachoir se compose de flocons séparés non collants, associés à de la poudre de conditionnement en excès.

Pour le produit enrobé d'attapulgite, 81% de la fraction supérieure à 500 µm est constitué de particules comprises entre 1600 et 4000 µm.

Tabelle VI

|  | Quantité en % | |
|---|---|---|
|  | % > 500 µm | % < 500 µm |
| Bentonite A | – | – |
| Bentonite F 50 | – | – |
| Attapulgite | 81,45 | 18,55 |
| Amidon | 94,5 | 5,5 |
| Acide stéarique | 83 | 17 |

EXEMPLE 6

Dans cet exemple, on utilise un gel de polymère cationique.

On prépare la solution suivante:
– eau                                                    155   g
– glycérine                                              3,1 g
– solution à 80% de chlorure de méthacrylate d'éthyltriméthyl-ammonium et 20% d'eau          15,8 g
– acrylamide                                             113,5 g
– acide adipique                                         12,6 g On ajoute à l'abri de la lumière 1,31 ml d'une solution à 8,66 g/l de benzildiméthylacétal par litre d'un mélange 50/50 en volume de méthanol-isopropanol.

Le pH est compris entre 2,7 et 2,9. On dégaze la solution à l'azote pour éliminer l'oxygène. On coule la solution sur une plaque d'acier comme à l'exemple 1.

On soumet pendant 15 minutes au rayonnement UV comme dans l'exemple 1, mais en passant progressivement de 800 watts/$m^2$ à 1200 watts/$m^2$; la plaque est refroidie pendant l'irradiation.

On obtient une plaque de gel à 43% en poids de matière sèche.

Dans le hachoir équipé d'une grille de 6 mm et dont la tête est refroidie à l'eau, on introduit 600 g de lanières de dimensions 4 × 5 × 0,52 cm et 180 g de silice TIXOSIL 38 A en 30 minutes environ.

Le produit récupéré à la sortie du hachoir se présente sous forme de grains non collants qui peuvent être mis en sacs. La répartition granulométrique est la suivante:

| Dimensions en microns | % du total |
|---|---|
| > 2000 | 46,7 |
| compris entre 1000 et 2000 | 19,7 |
| compris entre 500 et 1000 | 5,2 |
| compris entre 100 et 500 | 12,9 |
| < 100 | 15,5 |

## EXEMPLE 7

On utilise un gel de polymère cationique titrant 56,8% en poids de matière sèche.

On prépare la solution suivante:
- eau      108,4 g
- glycérine      4 g
- solution à 80% de chlorure de méthacrylate d'éthyltriméthyl-ammonium et 20% d'eau      84,8 g
- acrylamide      102,8 g

On ajoute à l'abri de la lumière 1,63 ml d'une solution à 13,5 g de benzildiméthylacétal par litre d'un mélange 50/50 en volume de méthanol-isopropanol.

Le pH naturel de 2,5 est maintenu. On dégaze à l'azote pour enlever l'oxygène. On coule sur 5,2 mm environ d'épaisseur dans une atmosphère désoxygénée la solution sur une plaque d'acier inoxydable préalablement revêtue d'une mince couche de Cemulcat K 2 SH de la SFOS. On irradie pendant 15 minutes avec 3 lampes actiniques; la puissance est maintenue à 1200 watts/m². Après refroidissement la plaque de gel caoutchouteux obtenue est découpée en lanières de dimension 4 × 5 × 0,52 cm et mélangée avec 90 g de silice TIXOSIL 38 A.

On alimente avec ce mélange le hachoir muni d'une grille de 6 mm et dont la tête est refroidie à l'eau.

A la sortie du hachoir, on récupère après tamisage à 500 μm des grains non collants qui se dissolvent rapidement dans l'eau et qui peuvent être mis en sacs tels quels.

## EXEMPLE 8

Dans cet exemple on fait varier la nature et la quantité de l'agent de conditionnement.

On utilise le gel de polymère préparé comme dans l'exemple 1. Le hachoir est équipé d'une grille de 6 mm et la tête est refroidie à l'eau.

Le TIXOSIL 33 J est une silice fine hydratée micronisée de la Société RHONE-POULENC, correspondant approximativement à la formule 10 $SiO_2$–1 $H_2O$, 5 $H_2O$, de surface spécifique 210 m²/g, de densité apparente 0,10 pour le produit tassé; le diamètre moyen des agglomérats est de 3 μm et le diamètre moyen des particules élémentaires est de $2.10^{-2}$ μm.

Les compositions et les résultats sont rassemblés dans le tableau VII. On voit que si la quantité d'agent de conditionnement est insuffisante on ne parvient pas à obtenir un gel sous la forme de grains séparés, fluides et non collants.

Tableau VII

| Nature du produit | Quantité pour 600 g de lanières en g | Dimensions | | Aspect du produit sortant du hachoir |
|---|---|---|---|---|
| | | >500 μm % | < 500 μm % | |
| Tixosil 38 A | 90 | 88,2 | 11,8 | grains séparés non collants |
| Tixosil 38 A | 45 | 95,8 | 4,2 | grains séparés non collants |
| Tixosil 38 A | 22 | – | – | d'abord grains séparés puis cordons continus |
| Tixosil 33 J | 90 | 90,7 | 9,3 | grains séparés non collants |
| Tixosil 33 J | 45 | – | – | cordons continus |

## EXEMPLE 9 Gel hydrophile

On prépare la solution suivante:
- eau      103,5 g
- acide acrylique      44,4 g
- N-N' méthylène bis acrylamide      0,3 g
- NaOH à 50%      48,8 g
- Acrylamide      103,5 g

On ajoute à l'abri de la lumière 0,32 ml d'une solution de benzildiméthylacétal à 34 g/litre d'acide acrylique.

La solution est désoxygénée par un courant d'azote. On coule la solution sur une plaque plane d'acier inoxydable de 36 cm de longueur, 15 cm de largeur, bordée de ridelles de 1 cm, de façon à former une couche de 5,2 mm. L'atmosphère gazeuse au-dessus de la couche liquide, délimitée par une plaque de verre, a été préalablement à l'introduction du mélange liquide, débarrassée de l'oxygène par un courant d'azote humide. La couche liquide est soumise pendant 15 minutes au rayonnement de 3 lampes ultraviolettes de type actinique (Philipps TLDAK 30W05); la puissance des lampes passant progressivement de 400 watts/m$^2$ à 1200 watts/m$^2$. La plaque est refroidie en-dessous par des jets d'eau, pendant l'irradiation. Après 15 minutes d'irradiation, on obtient une couche de gel caoutchouteux de 5,2 mm d'épaisseur.

La couche caoutchouteuse obtenue est découpée en lanières d'environ 4 × 5 × 0,52 cm. Dans un récipient en acier inoxydable on mélange 300 g de lanières et 90 g d'attapulgite.

Le mélange est introduit lentement dans un hachoir à viande équipé d'une vis d'archimède ayant une longueur de 12 cm et un diamètre de 4,9 à 4,2 cm, et d'une grille de 7 cm de diamètre avec des trous de 6 mm. La température du hachoir est maintenue à 23–25°C par de l'air comprimé. On tamise à 500 μm; la partie inférieure à 500 μm est recyclable.

On récupère des flocons blancs, éclatés de gel de polymère détachés les uns des autres, non collants; la dimension des flocons varie entre 0,5 mm et 2,5 mm.

Le produit (fraction supérieure à 500 μm) est mis en présence de 100 fois son volume d'eau pendant 3 mn puis on filtre sur un tamis de 160 μm et on mesure l'augmentation de poids qui est représentative du taux de gonflement; on obtient un taux de gonflement de 3400 g d'eau par 100 g de produit.

## Revendications

1) Procédé pour l'obtention de polymères acryliques hydro-solubles ou hydrophiles sous forme de flocons de faibles dimensions à partir d'une plaque, feuille, ou bloc de gel caoutchouteux caractérisé en ce que l'on hache le gel dans un appareil à déchiqueter en présence d'un agent de conditionnement minéral ou organique, solide, particulaire, en quantité comprise entre 5 et 40% en poids par rapport au poids du gel, de manière à obtenir à la sortie de l'appareil un mélange constitué des flocons du gel de polymère enrobés de l'agent de conditionnement et de poudre d'agent de conditionnement en excès.

2) Procédé selon la revendication 1, caractérisé en ce que le polymère est un gel hydrosoluble d'homopolymère ou de copolymère d'acrylamide.

3) Procédé selon la revendication 1, dans lequel le polymère est un gel hydrophile de copolymères d'acrylamide réticulé.

4) Procédé selon la revendication 3, caractérisé en ce que le gel est un copolymère d'acrylamide, d'acide acrylique et d'un monomère réticulant polyfonctionnel.

5) Procédé selon l'une des revendications 1 à 4, dans lequel le gel est issu d'un procédé de photopolymérisation en couche mince.

6) Procédé selon l'une des revendications 1 à 5, caractérisé en ce que la concentration du polymère dans le gel caoutchouteux est compris entre 20 et 85% en poids.

7) Procédé selon l'une des revendications 1 à 6, caractérisé en ce que l'agent de conditionnement est choisi dans le groupe des silices, des silicates, des alumines, des amidons, des acides gras.

8) Procédé selon la revendication 7, caractérisé en ce que l'agent de conditionnement est une silice précipitée ayant une surface spécifique BET comprise entre 200 et 400 m$^2$/g, un diamètre des particules ultimes compris entre $2.10^{-2}$ et $8.10^{-2}$ μm, un diamètre moyen des agglomérats, inférieur à 100 μm et une densité apparente pour le produit tassé inférieure à 0,25.

9) Procédé selon la revendication 7, caractérisé en ce que l'agent de conditionnement est un silicoaluminate hydraté.

10) Procédé selon la revendication 9, caractérisé en ce que le silicoaluminate est l'attapulgite ou la sépiolite.

11) Procédé selon la revendication 1, caractérisé en ce que le mélange sortant de l'appareil à déchiqueter est tamisé de manière à séparer les flocons de la poudre de conditionnement en excès et la poudre de conditionnement en excès est recyclée.

12) Procédé selon l'une des revendications 1 à 11, caractérisé en ce que l'appareil à déchiqueter est un hachoir du type hachoir à viande.

13) Procédé selon la revendication 12, caractérisé en ce que le hachoir est muni d'une grille dont les trous sont compris entre 1 et 10 mm, de préférence 4 à 6 mm et que la tête du hachoir est refroidie.

14) Gels de polymères acryliques hydrosolubles sous forme de flocons ou grains éclatés de polymère de dimension moyenne comprise entre 0,3 et 8 mm, revêtus de 1 à 20% en poids d'un agent de conditionnement solide, particulaire.

15) Gels de polymères acryliques hydrophiles sous forme de flocons ou grains éclatés de polymère de dimension moyenne comprise entre 0,3 et 8 mm, revêtus de 1 à 20% en poids d'un agent de conditionnement solide, particulaire.

16) Gels de polymère sous forme de flocons selon l'une des revendications 14 ou 15, caractérisés en ce que 70 à 90% en poids des particules sont compris entre 1 et 4 mm.

## Claims

1. Process for producing water-soluble or hydrophilic acrylic polymers in the form of flocs of small size from a plaque, sheet or block of rubbery gel, characterized in that the gel is chopped in a shredding apparatus in the presence of a particulate, solid, inorganic or organic conditioning agent, in a quantity of between 5 and 40% by weight based on the weight of the gel, so as to produce at the outlet of the apparatus a mixture consisting of flocs of the polymer gel which are coated with the conditioning agent and excess conditioning agent powder.

2. Process according to Claim 1, characterized in that the polymer is a water-soluble gel of homopolymer or of copolymer of acrylamid.

3. Process according to Claim 1, in which the polymer is a hydrophilic gel of copolymers of crosslinked acrylamide.

4. Process according to Claim 3, characterized in that the gel is a copolymer of acrylamide, of acrylic acid and of a polyfunctional crosslinking monomer.

5. Process according to one of Claims 1 to 4, in which the gel originates from a thin-layer photopolymerization process.

6. Process according to one of Claims 1 to 5, characterized in that the concentration of the polymer in the rubbery gel is between 20 and 85% by weight.

7. Process according to one of Claims 1 to 6, characterized in that the conditioning agent is chosen from the group of silicas, silicates, aluminas, starches and fatty acids.

8. Process according to Claim 7, characterized in that the conditioning agent is a precipitated silica having a BET specific surface of between 200 and 400 $m^2/g$, an ultimate particle diameter of between $2.10^{-2}$ and $8.10^{-2}$ µm, a mean diameter of the agglomerates of less than 100 µm and an apparent density of the settled product of less than 0.25.

9. Process according to Claim 7, characterized in that the conditioning agent is a hydrated silicoaluminate.

10. Process according to Claim 9, characterized in that the silicoaluminate is attapulgite or sepiolite.

11. Process according to Claim 1, characterized in that the mixture leaving the shredding apparatus is screened so as to separate the flocs from the excess conditioning powder and the excess conditioning powder is recycled.

12. Process according to one of Claims 1 to 11, characterized in that the shredding apparatus is a mincer of the meat-mincer type.

13. Process according to Claim 12, characterized in that the mincer is fitted with a grid whose holes are between 1 and 10 mm, preferably 4 to 6 mm and that the head of the mincer is cooled.

14. Gels of water-soluble acrylic polymers in the form of flocs or exploded grains of polymer of a mean size of between 0.3 and 8 mm, which are coated with 1 to 20% by weight of a particulate, solid conditioning agent.

15. Gels of hydrophilic acrylic polymers in the form of flocks or exploded grains of polymer of a mean size of between 0.3 and 8 mm, which are coated with 1 to 20% by weight of a particulate, solid conditioning agent.

16. Polymer gels in floc form according to either of Claims 14 and 15, characterized in that 70 to 90% by weight of the particles are between 1 and 4 mm.

**Patentansprüche**

1. Verfahren zur Herstellung von wasserlöslichen oder hydrophilen Acryl-Polymeren in Form kleiner Flocken, ausgehend von einer Platte, Folie oder einem Block eines kautschukartigen Gels, dadurch gekennzeichnet, dass man das Gel in einer Zerkleinerungsvorrichtung in Gegenwart eines anorganischen oder organischen, festen, teilchenförmigen Konditioniermittels in einer Menge von 5 bis 40 Gew.-%, bezogen auf das Gewicht des Gels, so zerkleinert, dass man am Ausgang der Vorrichtung ein Gemisch erhält, bestehend aus Flocken des Polymergels, die von dem Konditioniermittel umhüllt sind und überschüssigem pulverförmigem Konditioniermittel.

2. Verfahren nach Anspruch 1, dadurch gekennzeichnet, dass das Polymer ein wasserlösliches Gel aus Acrylamid-homopolymer oder -copolymer ist.

3. Verfahren nach Anspruch 1, dadurch gekennzeichnet, dass das Polymer ein hydrophiles Gel aus Copolymeren von vernetztem Acrylamid ist.

4. Verfahren nach Anspruch 3, dadurch gekennzeichnet, dass das Gel ein Copolymer aus Acrylamid, Acrylsäure und einem polyfunktionellen vernetzenden Monomer ist.

5. Verfahren nach einem der Ansprüche 1 bis 4, dadurch gekennzeichnet, dass das Gel erhalten worden ist durch ein Dünnschicht-Fotopolymerisations-Verfahren.

6. Verfahren nach einem der Ansprüche 1 bis 5, dadurch gekennzeichnet, dass die Konzentration des Polymers in dem kautschukartigen Gel 20 bis 85 Gew.-% beträgt.

7. Verfahren nach einem der Ansprüche 1 bis 6, dadurch gekennzeichnet, dass das Konditioniermittel ausgewählt ist aus der Gruppe Kieselsäuren, Silicaten, Tonerden, Stärken und Fettsäuren.

8. Verfahren nach Anspruch 7, dadurch gekennzeichnet, dass das Konditioniermittel eine gefällte Kieselsäure mit einer spezifischen BET-Oberfläche zwischen 200 und 400 $m^2/g$, einem Durchmesser der Primärteilchen von $2.10^{-2}$ bis $8.10^{-2}$ µm, einem mittleren Teilchendurchmesser der Agglomerate < 100 µm und einer Schüttdichte für das gerüttelte Produkt < 0,25 ist.

9. Verfahren nach Anspruch 7, dadurch gekennzeichnet, dass das Konditioniermittel ein hydratisiertes Aluminiumsilicat ist.

10. Verfahren nach Anspruch 9, dadurch gekennzeichnet, dass das Aluminiumsilicat Attapulgit oder Sepiolit ist.

11. Verfahren nach Anspruch 1, dadurch gekennzeichnet, dass das aus der Zerkleinerungsvorrichtung austretende Gemisch gesiebt wird, um die Flocken von dem Pulver des überschüssigen Konditioniermittels abzutrennen, und das überschüssige pulverförmige Konditioniermittel zurückgeführt wird.

12. Verfahren nach einem der Ansprüche 1 bis 11, dadurch gekennzeichnet, dass die Zerkleinerungsvorrichtung eine fleischwolfartige Hackmaschine ist.

13. Verfahren nach Anspruch 12, dadurch gekennzeichnet, dass die Hackmaschine eine Lochplatte aufweist, deren Öffnungen 1 bis 10 mm, vorzugsweise 4 bis 6 mm, gross sind, und dass der Kopf der Hackmaschine gekühlt wird.

14. Wasserlösliche Polyacrylgele in Form von Flocken oder aufgeplatzten Körnern des Polymers mit einer mittleren Grösse von 0,3 bis 8 mm, die umhüllt sind von 1 bis 20 Gew.-% eines festen teilchenförmigen Konditioniermittels.

15. Hydrophile Polyacrylgele in Form von Flocken oder aufgeplatzten Körnern des Polymers mit einer mittleren Grösse von 0,3 bis 8 mm, die umhüllt sind von 1 bis 20 Gew.-% eines festen teilchenförmigen Konditioniermittels.

16. Polymergele in Form von Flocken nach einem der Ansprüche 14 oder 15, dadurch gekennzeichnet, dass 70 bis 90 Gew.-% der Teilchen zwischen 1 und 4 mm gross sind.